# EUROPEAN PATENT SPECIFICATION

(11) **EP 2 063 719 B1**
(45) Date of publication and mention of the grant of the patent: **23.02.2011**
(21) Application number: 07842971.9
(22) Date of filing: 21.09.2007
(51) Int. Cl.: A23J 3/22, A23J 3/14, A23J 3/26, A23L 1/314

(54) **PROCESS FOR PRODUCING COLORED STRUCTURED PLANT PROTEIN PRODUCTS**
VERFAHREN ZUR HERSTELLUNG GEFÄRBTER UND STRUKTURIERTER PFLANZENPROTEINPRODUKTE
PROCÉDÉ DE PRODUCTION DE PRODUITS À BASE DE PROTÉINES VÉGÉTALES STRUCTURÉES COLORÉES

(30) Priority: 21.09.2006 US 826477 P; 20.09.2007 US 858769
(43) Date of publication of application: 03.06.2009
(73) Proprietor: Solae, LLC, St. Louis, MO 63110 (US)
(72) Inventor: ALTEMUELLER, Andreas G., St. Louis, MO 63119 (US)
(74) Representative: Hirsch, Marc-Roger
(86) International application number: PCT/US2007/079169
(87) International publication number: WO 2008/036906

(56) References cited:
- WO-A-88/06001
- WO-A-2004/016097
- WO-A-2006/023518
- GB-A- 1 380 513
- GB-A- 1 464 376
- GB-A- 1 470 047

## Description

The present invention provides a process for producing structured plant protein products generally having a dark color. In the process, plant protein material is combined with at least one reducing sugar in the presence of elevated temperature and pressure. The invention also provides animal meat compositions and simulated animal meat composition comprising the colored structured plant protein products.

### BACKGROUND OF THE INVENTION

Food scientists have devoted much time developing methods for preparing acceptable meat-like food products, such as beef, pork, poultry, fish, and shellfish analogs, from a wide variety of plant proteins. Soy protein has been utilized as a protein source because of its relative abundance and reasonably low cost. Extrusion processes typically prepare meat analogs. The dry blend is processed to form a fibrous material. To date, meat analogs made from high protein extrudates have had limited acceptance because they lack meat-like texture characteristics and mouth feel. Rather, they are characterized as spongy and chewy, largely due to the random, twisted nature of the protein fibers that are formed. Most are used as extenders for ground, hamburger-type meats.

Document GB 1464376 discloses foodstuffs prepared by making a dough containing a vegetable protein composition and a small proportion of a C5 sugar and / or a phosphate ester of a C5 sugar, and then cooking and texturizing the dough in an extruder.

Document WO 2006/023518 teaches restructured meat products containing a soy protein material, comminuted meat and water.

There is a still an unmet need for a structured plant protein product that simulates the fibrous structure of animal meat and has an acceptable meat-like texture, flavor, and color.

### SUMMARY OF THE INVENTION

One aspect of the present invention encompasses a simulated animal meat composition. The simulated animal meat composition comprises a colored structured plant protein product comprising protein fibers that are substantially aligned. Typically, the colored structured plant protein product is an extrudate of plant protein material and a reducing sugar.

A further aspect of the invention encompasses an animal meat composition. The animal meat composition comprises animal meat; and colored structured plant protein product. The colored structured plant protein product comprises protein fibers that are substantially aligned, and is generally an extrudate of plant protein material and a reducing sugar.

Yet another aspect of the invention provides a process for producing a colored structured plant protein product. The process

comprises combining a plant protein material with a reducing sugar to form a mixture. The mixture is extruded under conditions of elevated temperature and pressure to form the colored structured plant protein product comprising protein fibers that are substantially aligned.

Other aspects and features of the invention are described in more detail below.

### FIGURE LEGENDS

The application file contains at least one photograph executed in color. Copies of this patent application publication with color photographs will be provided by the Office upon request and payment of the necessary fee.

Figure 1 depicts a photographic image of a micrograph showing a structured plant protein product of the Invention having protein fibers that are substantially aligned.

Figure 2 depicts a photographic image of a micrograph showing a plant protein product not produced by the process of the present invention. The protein fibers comprising the plant protein product, as described herein, are crosshatched.

Figure 3 depicts a photographic image of samples of the colored structured plant protein product of the invention using a 1% xylose formulation to color the structured plant protein product.

### DETAILED DESCRIPTION OF THE INVENTION

The present invention provides animal meat compositions or simulated meat compositions and processes for producing each of the meat compositions. The animal meat composition will comprise animal meat and colored structured plant protein products having protein fibers that are substantially aligned. Alternatively, the simulated animal meat composition will comprise colored structured plant protein products having protein fibers that are substantially aligned. The process of the invention provides a means to produce colored structured plant protein products that are typically brown or tan and generally have a savory flavor without the addition of colorants or flavorings. Advantageously, because of the typically dark color of the structured plant protein products, they may be utilized in both animal meat compositions and simulated animal meat compositions for dark meat applications. In addition, the animal meat compositions also generally have acceptable meat-like texture, flavor, and color.

### (I) Colored Structured Plant Protein Products

The animal meat compositions and simulated animal meat compositions of the invention each comprise colored structured plant protein products comprising protein fibers that are substantially aligned, as described in more detail in I (f) below. In an exemplary embodiment, the plant protein products are extrudates of plant protein material and reducing sugar that have been subjected to the extrusion process detailed in I(e) below. Because the colored structured plant protein products utilized in the invention have protein fibers that are substantially aligned in a manner similar to animal meat, the animal meat compositions and simulated animal meat compositions generally have the texture and feel of compositions containing all animal meat. Moreover, because the color of the structured plant protein products is generally dark, they are useful for a variety of dark meat applications.

### protein-containing materials

A variety of ingredients that contain protein may be utilized in an extrusion process to produce colored structured plant protein products suitable for use in the animal meat compositions and simulated animal meat compositions. While ingredients comprising proteins derived from plants are typically used, it is also envisioned that proteins derived from other sources, such as animal sources, may be utilized without departing from the scope of the invention. For example, a dairy protein selected from the group consisting of casein, caseinates, whey protein, milk protein concentrate, milk protein isolate, and mixtures thereof may be utilized. In an exemplary embodiment, the dairy protein is whey protein. By way of further example, an egg protein selected from the group consisting of ovalbumin, ovoglobulin, ovomucin, ovomucoid, ovotransferrin, ovovitella, ovovitellin, albumin globulin, and vitellin may be utilized.

It is envisioned that other ingredient types in addition to proteins may be utilized. Not limiting examples of such ingredients include sugars, starches, oligosaccharides, soy fiber and other dietary fibers, and gluten.

It is also envisioned that the protein-containing starting materials may be gluten-free. Because gluten is typically used in filament formation during the extrusion process, if a gluten-free starting material is used, an edible crosslink agent may be utilized to facilitate filament formation. Non- limiting examples of suitable crosslink agents include Konjac glucomannan (KGM) flour, edible crosslink agents, Pureglucan manufactured by Takeda (USA), calcium salts, and magnesium salts. It is also believed that the use of a reducing sugar facilitates filament formation. As such, when a relatively large amount of reducing sugar is utilized, the need for a cross-linking agent may be diminished. One skilled in the art can readily determine the amount of cross linker needed, if any, in gluten-free embodiments.

Irrespective of its source or ingredient classification, the ingredients utilized in the extrusion process are typically capable of forming extrudates having protein fibers that are substantially aligned. Suitable examples of such ingredients are detailed more fully below.

### plant protein materials

In an exemplary embodiment, at least one ingredient derived from a plant will be utilized to form the protein-containing materials. Generally speaking, the ingredient will comprise a protein. The amount of protein present in the ingredient(s) utilized can and will vary depending upon the application. For example, the amount of protein present in the ingredient(s) utilized may range from about 40% to about 100% by weight. In another embodiment, the amount of protein present in the ingredient(s) utilized may range from about 50% to about 100% by weight. In an additional embodiment, the amount of protein present in the ingredient(s) utilized may range from about 60% to about 100% by weight. In a further embodiment, the amount of protein present in the ingredient(s) utilized may range from about 70% to about 100% by weight. In still another embodiment, the amount of protein present in the ingredient(s) utilized may range from about 80% to about 100% by weight. In a further embodiment, the amount of protein present in the ingredient(s) utilized may range from about 90% to about 100% by weight.

The ingredient(s) utilized in extrusion may be derived from a variety of suitable plants. By way of non-limiting example, suitable plants include legumes, corn, peas, canola, sunflowers, sorghum, rice, amaranth, potato, tapioca, arrowroot, canna, lupin, rape, wheat, oats, rye, barley, and mixtures thereof.

In one embodiment, the ingredients are isolated from wheat and soybeans. In another exemplary embodiment, the ingredients are isolated from soybeans. Suitable wheat derived protein-containing ingredients include wheat gluten, wheat flour, and mixtures thereof. An example of commercially available wheat gluten that may be utilized in the invention is Gem of the West Vital Wheat Gluten, either regular or organic, available from Manildra Milling (Shawnee Mission, KS). Suitable soybean derived protein-containing ingredients ("soy protein material") include soy protein isolate, soy protein concentrate, soy flour, and mixtures thereof, each of which are detailed below. In each of the foregoing embodiments, the soybean material may be combined with one or more ingredients selected from the group consisting of a starch, flour, gluten, a dietary fiber, and mixtures thereof.

Suitable examples of protein-containing material isolated from a variety of sources are detailed in Table A, which shows various combinations.

**Table A Protein Combinations**

| First protein source | Second ingredient |
|---|---|
| Soybean | Wheat |
| Soybean | Dairy |
| Soybean | egg |
| Soybean | corn |
| Soybean | rice |
| Soybean | barley |
| Soybean | sorghum |
| Soybean | oat |
| Soybean | millet |
| Soybean | rye |
| Soybean | triticale |
| Soybean | buckwheat |
| Soybean | pea |
| Soybean | peanut |
| Soybean | lentil |
| Soybean | lupin |
| Soybean | channa (garbonzo) |
| Soybean | rapeseed (canola) |
| Soybean | cassava |
| Soybean | sunflower |
| Soybean | whey |
| Soybean | tapioca |
| Soybean | arrowroot |
| Soybean | amaranth |
| Soybean | wheat and dairy |
| Soybean | wheat and egg |
| Soybean | wheat and corn |
| Soybean | wheat and rice |
| Soybean | wheat and barley |
| Soybean | wheat and sorghum |
| Soybean | wheat and oat |
| Soybean | wheat and millet |
| Soybean | wheat and rye |
| Soybean | wheat and triticale |
| Soybean | wheat and buckwheat |
| Soybean | wheat and pea |
| Soybean | wheat and peanut |
| Soybean | wheat and lentil |
| Soybean | wheat and lupin |
| Soybean | wheat and channa (garbonzo) |
| Soybean | wheat and rapeseed (canola) |
| Soybean | wheat and cassava |
| Soybean | wheat and sunflower |
| Soybean | wheat and potato |
| Soybean | wheat and tapioca |
| Soybean | wheat and arrowroot |
| Soybean | wheat and amaranth |
| Soybean | corn and wheat |
| Soybean | corn and dairy |
| Soybean | corn and egg |
| Soybean | corn and rice |
| Soybean | corn and barley |
| Soybean | corn and sorghum |
| Soybean | corn and oat |
| Soybean | corn and millet |
| Soybean | corn and rye |
| Soybean | corn and triticale |
| Soybean | corn and buckwheat |
| Soybean | corn and pea |
| Soybean | corn and peanut |
| Soybean | corn and lentil |
| Soybean | corn and lupin |
| Soybean | corn and channa (garbonzo) |
| Soybean | corn and rapeseed (canola) |
| Soybean | corn and cassava |
| Soybean | corn and sunflower |
| Soybean | corn and potato |
| Soybean | corn and tapioca |
| Soybean | corn and arrowroot |
| Soybean | corn and amaranth |

In each of the embodiments delineated in Table A, the combination of protein-containing materials may be combined with one or more ingredients selected from the group consisting of a starch, flour, gluten, a dietary fiber, and mixtures thereof. In one embodiment, the protein-containing material comprises protein, starch, gluten, and fiber. In an exemplary embodiment, the protein-containing material comprises from about 45% to about 65% soy protein on a dry matter basis; from about 20% to about 30% wheat gluten on a dry matter basis; from about 10% to about 15% wheat starch on a dry matter basis; and from about 1% to about 5% fiber on a dry matter basis. In each of the foregoing embodiments, the protein-containing material may comprise dicalcium phosphate, L-cysteine or combinations of both dicalcium phosphate and L-cysteine.

### (I) (ii).soy protein materials

In an exemplary embodiment, as detailed above, soy protein isolate, soy protein concentrate, soy flour, and mixtures thereof may be utilized in the extrusion process. The soy protein materials may be derived from whole soybeans in accordance with methods generally known in the art. The whole soybean may be standard soybeans (i.e., non genetically modified soybeans), commoditized soybeans, hybridized soybeans, genetically modified soybeans, and combinations thereof.

Generally speaking, when soy isolate is used, an isolate is preferably selected that is not a highly hydrolyzed soy protein isolate. In certain embodiments, highly hydrolyzed soy protein isolates, however, may be used in combination with other soy protein isolates provided that the highly hydrolyzed soy protein isolate content of the combined soy protein isolates is generally less than about 40% of the combined soy protein isolates, by weight. Examples of soy protein isolates that are useful in the present invention are commercially available, for example, from Solae, LLC (St. Louis, Mo.), and include SUPRO^{®} 500E, SUPRO^{®} EX 33, SUPRO^{®} 620, and SUPRO^{®} 545. In an exemplary embodiment, a form of SUPRO^{®} 620 is utilized as detailed in Example 3.

Alternatively, soy protein concentrate or soy flour may be blended with the soy protein isolate to substitute for a portion of the soy protein isolate as a source of soy protein material. Typically, if a soy protein concentrate is substituted for a portion of the soy protein isolate, the soy protein concentrate is substituted for up to about 40% of the soy protein isolate by weight, at most, and more preferably is substituted for up to about 30% of the soy protein isolate by weight. Examples of suitable soy protein concentrates useful in the invention include Procon, Alpha 12, and Alpha 5800, which are commercially available from Solae, LLC (St. Louis, Mo.). If a soy flour is substituted for a portion of the soy protein isolate, the soy flour is substituted for up to about 35% of the soy protein isolate by weight. The soy flour should be a high protein dispersibility index (PDI) soy flour.

Any fiber known in the art that will work in the application can be used as the fiber source. Soy cotyledon fiber may optionally be utilized as a fiber source. Typically, suitable soy cotyledon fiber will generally effectively bind water when the mixture of soy protein and soy cotyledon fiber is extruded. In this context, "effectively bind water" generally means that the soy cotyledon fiber has a water holding capacity of at least 5.0 to about 8.0 grams of water per gram of soy cotyledon fiber, and preferably the soy cotyledon fiber has a water holding capacity of at least about 6.0 to about 8.0 grams of water per gram of soy cotyledon fiber. When present in the soy protein material, soy cotyledon fiber may be present in an amount ranging from about 1% to about 20%, preferably from about 1.5% to about 20% and most preferably, at from about 2% to about 5% by weight on a moisture free basis. Suitable soy cotyledon fiber is commercially available. For example, FIBRIM^{®} 1260 and FIBRIM^{®} 2000 are soy cotyledon fiber materials that are commercially available from Solae, LLC (St. Louis, Mo.).

### (b) reducing sugar

The protein-containing material detailed in I(a) is generally combined with at least one reducing sugar. Generally speaking, when the mixture of protein-containing material and reducing sugar is subjected to an elevated temperature, the mixture undergoes a Maillard reaction, which typically produces a product having a dark color (e.g., brown or tan) and savory flavor. Without being bound by any particular theory, it is believed that the Maillard reaction is typically initiated by a non-enzymatic condensation of the reducing sugar, with a primary amine group that is present within the protein-containing material, to form a Schiff base; which then undergoes an Amadori rearrangement to regenerate carbonyl activity (see, e.g., Smith et al. (1993) Proc. Natl. Acad. Sci. USA 91, 5710-5714).

A variety of reducing sugars are suitable for use in the present invention to the extent the reducing sugar is capable of undergoing a Maillard reaction with protein-containing material when the combination is subjected to elevated temperature. The reducing sugar may be a monosaccharide, a disaccharide or a polysaccharide. Exemplary monosaccharide reducing sugars include pentoses and hexoses. Other suitable reducing sugars include ribose, xylose, arabinose, lactose, glyceraldehyde, fructose, maltose, and glucose. In an exemplary embodiment, the reducing sugar is xylose.

As will be appreciated by the skilled artisan the amount of reducing sugar combined with the protein-containing material can and will vary depending upon the desired color of the resulting product and its process of preparation. When the process of preparation is extrusion, for example, the amount of reducing sugar may range from about 0.05% to about 2% by weight on a dry matter basis. By way of further example, when the process of preparation is retort cooking, the amount of reducing sugar may range from about 2% to about 10% by weight on a dry matter. Irrespective of the method of preparation, in some embodiments, the amount of reducing sugar may range from about 0.001% to about 15% on a dry matter basis. In another embodiment, the amount of reducing sugar may range from 0.05% to about 10% by weight on a dry matter basis.

### additional ingredients

A variety of additional ingredients may be added to any of the combinations of protein-containing materials and reducing sugars detailed above without departing from the scope of the invention. For example, antioxidants, antimicrobial agents, and combinations thereof may be included. Antioxidant additives include BHA, BHT, TBHQ, vitamins A, C and E and derivatives, and various plant extracts such as those containing carotenoids, tocopherols or flavonoids having antioxidant properties, may be included to increase the shelf-life or nutritionally enhance the animal meat compositions or simulated animal meat compositions. The antioxidants and the antimicrobial agents may have a combined presence at levels of from about 0.01 % to about 10%, preferably, from about 0.05% to about 5%, and more preferably from about 0.1 % to about 2%, by weight of the protein-containing materials.

### moisture content

As will be appreciated by the skilled artisan, the moisture content of the protein-containing materials and reducing sugars can and will vary depending upon the thermal process the combination is subjected to, e.g., retort cooking, microwave cooking, and extrusion. In an exemplary embodiment, the thermal process is extrusion. Generally speaking, when the thermal process is extrusion, the moisture content may range from about 1% to about 80% by weight. In low moisture extrusion applications, the moisture content of the protein-containing materials may range from about 1% to about 35% by weight. Alternatively, in high moisture extrusion applications, the moisture content of the protein-containing materials may range from about 35% to about 80% by weight. In an exemplary embodiment, the extrusion application utilized to form the extrudates is low moisture. An exemplary example of a low moisture extrusion process to produce extrudates having proteins with fibers that are substantially aligned is detailed in I(e) and Example 3.

### co-extrusion of the protein-containing material and reducing sugar

While it is envisioned that several thermal processes may be utilized to heat the mixture of protein-containing material and reducing sugar to a temperature at which a Maillard reaction occurs, in an exemplary embodiment the process is extrusion. In particular, the extrusion process preferably results in the formation of a colored structured plant protein product (i.e., in this case, an extrudate) having the physical characteristics detailed in I(f). A suitable extrusion process for the preparation of colored structured plant protein product comprises introducing the plant protein material, reducing sugar, and other ingredients into a mixing tank (i.e., an ingredient blender) to combine the ingredients and form a dry blended plant protein material pre-mix. The dry blended plant protein material pre-mix is then transferred to a hopper from which the dry blended ingredients are introduced along with moisture Into a pre-conditioner to form a conditioned plant protein material mixture. The conditioned material is then fed to an extruder in which the mixture is heated under mechanical pressure generated by the screws of the extruder to form a molten extrusion mass. The molten extrusion mass exits the extruder through an extrusion die.

### extrusion process conditions

Among the suitable extrusion apparatuses useful in the practice of the present invention is a double barrel, twin-screw extruder as described, for example, in U.S. Pat. No. 4,600,311. Further examples of suitable commercially available extrusion apparatuses include a CLEXTRAL Model BC-72 extruder manufactured by Clextral, Inc. (Tampa, FL); a WENGER Model TX-57 extruder, a WENGER Model TX-168 extruder, and a WENGER Model TX-52 extruder all manufactured by Wenger Manufacturing, Inc. (Sabetha, KS). Other conventional extruders suitable for use in this invention are described, for example, in U.S. Pat. Nos. 4,763,569, 4,118,164, and 3,117,006, which are hereby incorporated by reference in their entirety. A single-screw extruder could also be used in the present invention. Examples of suitable, commercially available single-screw extrusion apparatuses include the Wenger X-175, the Wenger X-165, and the Wenger X-85 all of which are available from Wenger Manufacturing, Inc.

The screws of a twin-screw extruder can rotate within the barrel in the same or opposite directions. Rotation of the screws in the same direction is referred to as single flow or co-rotating whereas rotation of the screws in opposite directions is referred to as double flow or counter-rotating. The speed of the screw or screws of the extruder may vary depending on the particular apparatus; however, it is typically from about 250 to about 450 revolutions per minute (rpm). Generally, as the screw speed increases, the density of the extrudate will decrease. The extrusion apparatus contains screws assembled from shafts and worm segments, as well as mixing lobe and ring-type shearing elements as recommended by the extrusion apparatus manufacturer for extruding plant protein material.

The extrusion apparatus generally comprises a plurality of heating zones through which the protein mixture is conveyed under mechanical pressure prior to exiting the extrusion apparatus through an extrusion die. The temperature in each successive heating zone generally exceeds the temperature of the previous heating zone by between about 10°C to about 70°C. In one embodiment, the conditioned pre-mix is transferred through four heating zones within the extrusion apparatus, with the protein mixture heated to a temperature of from about 100°C to about 150°C such that the molten extrusion mass enters the extrusion die at a temperature of from about 100°C to about 150°C. There is no active heating or cooling necessary. Typically, temperature changes are due to work Input and can happen suddenly.

The pressure within the extruder barrel is typically between about 3.45 x 10⁵ Pa to about 3.45 x 10⁶ Pa relative to atmospheric pressure (about 50 psig to about 500 psig) preferably between about 5.17 x 10⁵ Pa to about 1.38 x 10⁶ Pa relative to atmospheric pressure (about 75 psig to about 200 psig) Generally the pressure within the last two heating zones is from about 6.89 x 10⁵ Pato about 2.07 x 10⁷ Pa relative to atmospheric pressure (about 100 psig to about 3000 psig), preferably between about 1.03 x 10⁶ Pa to about 3.45 x 10⁶ Pa relative to atmospheric pressure (about 150 psig to about 500 psig). The barrel pressure is dependent on numerous factors including, for example, the extruder screw speed, feed rate of the mixture to the barrel, feed rate of water to the barrel, and the viscosity of the molten mass within the barrel.

Water is injected into the extruder barrel to hydrate the plant protein material mixture and promote texturization of the proteins. As an aid in forming the molten extrusion mass, the water may act as a plasticizing agent. Water may be introduced to the extruder barrel via one or more injection jets. Typically, the mixture in the barrel contains from about 15% to about 35% by weight water. The rate of introduction of water to barrel is generally controlled to promote production of an extrudate having desired characteristics. It has been observed that as the rate of introduction of water to the barrel decreases, the density of the extrudate decreases. Typically, less than about 1 kg of water per kg of protein is introduced to the barrel. Preferably, from about 0.1 kg to about 1 kg of water per kg of protein are introduced to the barrel.

### (ii) preconditioning

In a pre-conditioner, the protein-containing material, reducing sugar and other ingredients (protein-containing mixture) can be preheated, contacted with moisture, and held under controlled temperature and pressure conditions to allow the moisture to penetrate and soften the individual particles. The preconditioner contains one or more paddles to promote uniform mixing of the protein and transfer of the protein mixture through the preconditioner. The configuration and rotational speed of the paddles vary widely, depending on the capacity of the preconditioner, the extruder throughput and/or the desired residence time of the mixture in the preconditioner or extruder barrel. Generally, the speed of the paddles is from about 100 to about 1300 revolutions per minute (rpm). Agitation must be high enough to obtain even hydration and good mixing.

Typically, the protein-containing mixture is pre-conditioned prior to introduction into the extrusion apparatus by contacting the pre-mix with moisture (i.e., steam and/or water). Preferably the protein-containing mixture is heated to a temperature of from about 25°C to about 80°C, more preferably from about 30°C to about 40°C in the preconditioner.

Typically, the protein-containing pre-mix is conditioned for a period of about 30 to about 60 seconds, depending on the speed and the size of the conditioner. The pre-mix is contacted with steam and/or water and heated in the pre-conditioner at generally constant steam flow to achieve the desired temperatures. The water and/or steam conditions (i.e., hydrates) the pre-mix, increases its density, and facilitates the flowability of the dried mix without interference prior to introduction to the extruder barrel where the proteins are texturized. If low moisture pre-mix is desired, the conditioned pre-mix may contain from about 1% to about 35% (by weight) water. If high moisture pre-mix is desired, the conditioned pre-mix may contain from about 35% to about 80% (by weight) water.

The conditioned pre-mix typically has a bulk density of from about 0.25 g/cm³ to about 0.6 g/cm³. Generally, as the bulk density of the pre-conditioned protein mixture increases within this range, the protein mixture is easier to process.

### (1) extrusion process

The conditioned pre-mix is then fed into an extruder to heat, shear, and ultimately plasticize the mixture. The extruder may be selected from any commercially available extruder and may be a single-screw extruder or preferably a twin-screw extruder that mechanically shears the mixture with the screw elements.

Whichever extruder is used, it should be run in excess of about 50% motor load. Typically, the conditioned pre-mix is introduced to the extrusion apparatus at a rate of between about 16 kilograms per minute to about 60 kilograms per minute. More preferably, the conditioned pre-mix is introduced to the extrusion apparatus at a rate of between about 26 kilograms per minute to about 32 kilograms per minute. Generally, it has been observed that the density of the extrudate decreases as the feed rate of pre-mix to the extruder increases.

The pre-mix is subjected to shear and pressure by the extruder to plasticize the mixture. The screw elements of the extruder shear the mixture as well as create pressure in the extruder by forcing.the mixture forwards though the extruder and through the die. Preferably, the screw motor speed is set to a speed of from about 200 rpm to about 500 rpm, and more preferably from about 300 rpm to about 450 rpm, which moves the mixture through the extruder at a rale of at least about 20 kilograms per minute, and more preferably at least about 40 kilograms per minute. Preferably the extruder generates an extruder barrel exit pressure of from about 3.45 x 10⁵ Pa to about 2.07 x 10⁷ Pa relative to atmospheric pressure (about 50 psig to about 3000 psig).

The extruder controls the temperature of the mixture as it passes through the extruder denaturing the protein in the mixture. The extruder includes a means for controlling the temperature of the mixture to ensure temperatures of from about 100°C to about 180°C. Preferably the means for controlling the temperature of the mixture in the extruder comprises extruder barrel jackets into which heating or cooling media such as steam or water may be Introduced to control the temperature of the mixture passing through the extruder. The extruder may also include steam injection ports for directly injecting steam into the mixture within the extruder. The extruder preferably includes multiple heating zones that can be controlled to independent temperatures, where the temperatures of the heating zones are preferably set to control the temperature of the mixture as it proceeds through the extruder. For example, the extruder may be set in a four temperature zone arrangement, where the first zone (adjacent the extruder inlet port) is set to a temperature of from about 80°C to about 100°C, the second zone is set to a temperature of from about 100°C to 135°C, the third zone is set to a temperature of from 135°C to about 150°C, and the fourth zone (adjacent the extruder exit port) is set to a temperature of from 150°C to 180°C. The extruder may be set in other temperature zone arrangements, as desired. For example, the extruder may be set in a five temperature zone arrangement, where the first zone is set to a temperature of about 25°C, the second zone is set to a temperature of about 50°C, the third zone is set to a temperature of about 95°C, the fourth zone is set to a temperature of about 130°C, and the fifth zone is set to a temperature of about 150°C.

The mixture forms a melted plasticized mass in the extruder. A die assembly is attached to the extruder in an arrangement that permits the plasticized mixture to flow from the extruder exit port into the die assembly, wherein the die assembly consists of a die and a back plate. Additionally, the die assembly produces substantial alignment of the protein fibers within the plasticized mixture as it flows through the die assembly. The back plate in combination with the die creates at least one central chamber that receives the melted plasticized mass from the extruder through at least one central opening. From the at least one central chamber, the melted plasticized mass is directed by flow directors into at least one elongated tapered channel. Each elongated tapered channel leads directly to an individual die aperture. The extrudate exits the die through at least one aperture in the periphery or side of the die assembly at which point the protein fibers contained within are substantially aligned. It is also contemplated that the extrudate may exit the die assembly through at least one aperture in the die face, which may be a die plate affixed to the die.

The width and height dimensions of the die aperture(s) are selected and set prior to extrusion of the mixture to provide the fibrous material extrudate with the desired dimensions. The width of the die aperture(s) may be set so that the extrudate resembles from a cubic chunk of meat to a steak filet, where widening the width of the die aperture(s) decreases the cubic chunk-like nature of the extrudate and increases the filet-like nature of the extrudate. Preferably the width of the die aperture(s) is/are set to a width of from about 5 millimeters to about 40 millimeters.

The height dimension of the die aperture(s) may be set to provide the desired thickness of the extrudate. The height of the aperture(s) may be set to provide a very thin extrudate or a thick extrudate. Preferably, the height of the die aperture(s) may be set to from about 1 millimeter to about 30 millimeters, and more preferably from about 8 millimeters to about 16 millimeters.

It is also contemplated that the die aperture(s) may be round. The diameter of the die aperture(s) may be set to provide the desired thickness of the extrudate. The diameter of the aperture(s) may be set to provide a very thin extrudate or a thick extrudate. Preferably, the diameter of the die aperture(s) may be set to from about 1 millimeter to about 30 millimeters, and more preferably from about 8 millimeters to about 16 millimeters.

The extrudate can be cut after exiting the die assembly. Suitable apparatuses for cutting the extrudate after it exits the die assembly include flexible knives manufactured by Wenger Manufacturing, Inc. (Sabetha, KS) and Clextral, Inc. (Tampa, FL). A delayed cut can also be done to the extrudate. One such example of a delayed cut device is a guillotine device.

The dryer, if one is used, generally comprises a plurality of drying zones in which the air temperature may vary. The extrudate will be present in the dryer for a time sufficient to provide an extrudate having the desired moisture content. Thus the temperature of the air is not important, if a lower temperature is used longer drying times will be required than if a higher temperature is used. Generally, the temperature of the air within one or more of the zones will be from about 100°C to about 185°C. At such temperatures the extrudate is generally dried for at least about 5 minutes and more generally, for at least about 10 minutes. Suitable dryers include those manufactured by Wolverine Proctor & Schwartz (Merrimac, MA), National Drying Machinery Co. (Philadelphia, PA), Wenger (Sabetha, KS), Clextral (Tampa, FL), and Buehler (Lake Bluff, IL).

The desired moisture content may vary widely depending on the Intended application of the extrudate. Generally speaking, the extruded material has a moisture content of from about 6% to about 13% by weight, if dried. Although not required In order to separate the fibers, hydrating in water until the water is absorbed is one way to separate the fibers. If the protein material is not dried or not fully dried, its moisture content is higher, generally from about 16% to about 30% by weight.

The dried extrudate may further be comminuted to reduce the average particle size of the extrudate. Suitable grinding apparatus include hammer mills such as Mikro Hammer Mills manufactured by Hosokawa Micron Ltd. (Engtand), Fitzmill^{®} manufactured by The Fitzpatrick Company (Elmhurst. IL), Comitrol^{®} processors made by Urschel Laboratories, Inc. (Valparaiso, IN), and roller mills such as RossKamp Roller Mills manufactured by RossKamp Champion (Waterloo, IA).

### characterization of the colored structured protein products

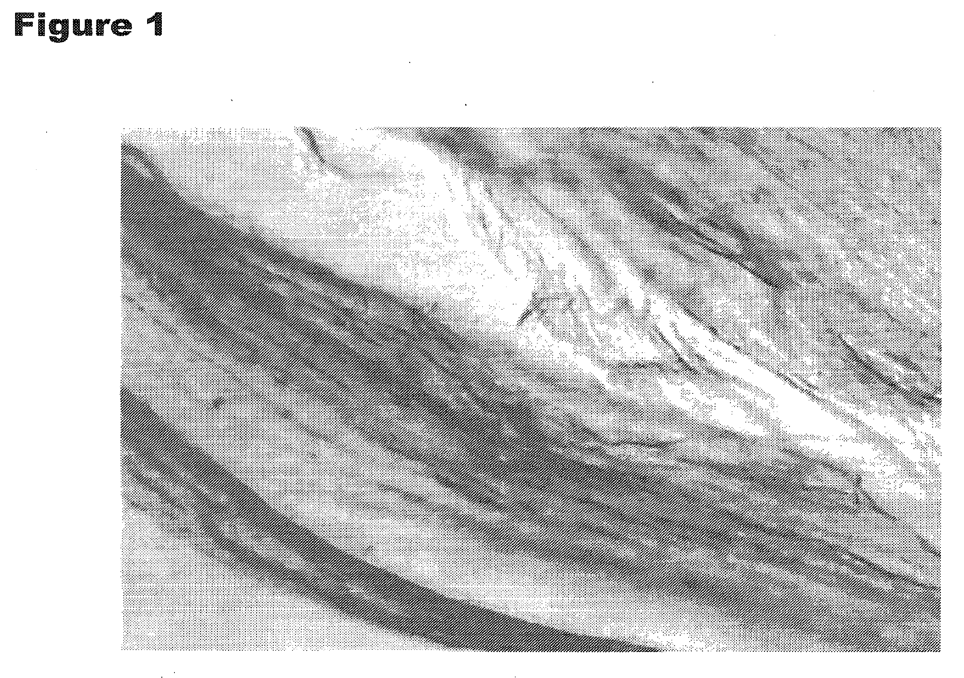

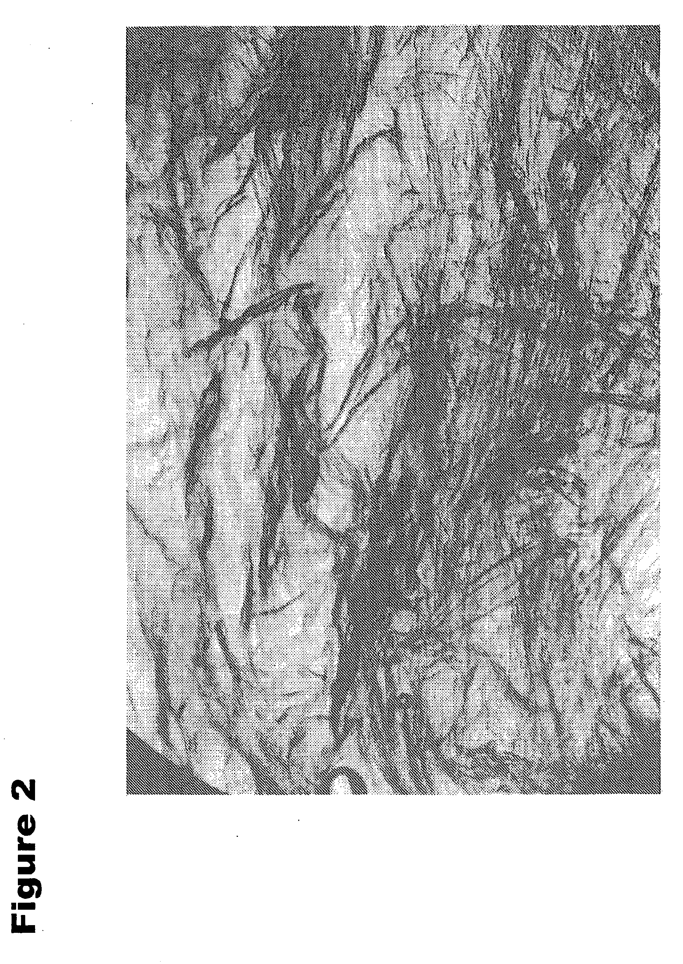

The extrudates produced in I(e) comprise the colored structured plant protein products comprising protein fibers that are substantially aligned. In the context of this invention "substantially aligned" generally refers to the arrangement of protein fibers such that a significantly high percentage of the protein fibers forming the colored structured plant protein product are contiguous to each other at less than approximately a 45° angle when viewed In a horizontal plane. Typically, an average of at least 55% of the protein fibers comprising the colored structured plant protein product are substantially aligned. In another embodiment, an average of at least 60% of the protein fibers comprising the colored structured plant protein product are substantially aligned. In a further embodiment, an average of at least 70% of the protein fibers comprising the colored structured plant protein product are substantially aligned. In an additional embodiment, an average of at least 80% of the protein fibers comprising the colored structured plant protein product are substantially aligned. In yet another embodiment, an average of at least 90% of the protein fibers comprising the colored structured plant protein product are Substantially aligned. Methods for determining the degree of protein fiber alignment are known in the art and include visual determinations based upon micrographic images. By way of example, **Figures 1** and **2** depict micrographic images that illustrate the difference between a structured plant protein product having substantially aligned protein fibers compared to a plant protein product having protein fibers that are significantly crosshatched. **Figure 1** depicts a structured plant protein product prepared according to I (a)-l (e) having protein fibers that are substantially aligned. Contrastingly, **Figure 2** depicts a plant protein product containing protein fibers that are significantly crosshatched and not substantially aligned. Because the protein fibers are substantially aligned, as shown in **Figure 1****,** the structured plant protein products utilized in the invention generally have the texture and consistency of cooked muscle meat. In contrast, extrudates having protein fibers that are randomly oriented or crosshatched generally have a texture that is soft or spongy.

Because the protein-containing material is hot in the presence of a reducing sugar, a Maillard reaction occurs; and the resulting structured plant protein products generally have a dark color. Depending upon the reaction conditions, the color can be optimized to match the color of a desired animal meat product. In some embodiments, the color may be a shade of brown, e.g., light brown, medium brown, and dark brown. In other embodiments, the color may be a shade of tan, e.g., light tan, medium tan, and dark tan.

In addition to having protein fibers that are substantially aligned, the colored structured plant protein products also typically have shear strength substantially similar to whole meat muscle. In this context of the invention, the term "shear strength" provides one means to quantify the formation of a sufficient fibrous network to impart whole-muscle like texture and appearance to the colored structured plant protein product. Shear strength is the maximum force in grams needed to shear through a given sample. A method for measuring shear strength is described in Example 1. Generally speaking, the colored structured plant protein products of the invention will have average shear strength of at least 1400 grams. In an additional embodiment, the colored structured plant protein products will have average shear strength of from about 1500 to about 1800 grams. In yet another embodiment, the colored structured plant protein products will have average shear strength of from about 1800 to about 2000 grams. In a further embodiment, the colored structured plant protein products will have average shear strength of from about 2000 to about 2600 grams. In an additional embodiment, the colored structured plant protein products will have average shear strength of at least 2200 grams. In a further embodiment, the colored structured plant protein products will have average shear strength of at least 2300 grams. In yet another embodiment, the colored structured plant protein products will have average shear strength of at least 2400 grams. In still another embodiment, the colored structured plant protein products will have average shear strength of at least 2500 grams. In a further embodiment, the colored structured plant protein products will have average shear strength of at least 2600 grams.

A means to quantify the size of the protein fibers formed in the colored structured plant protein products may be done by a shred characterization test. Shred characterization is a test that generally determines the percentage of large pieces formed in the colored structured plant protein product. In an indirect manner, percentage of shred characterization provides an additional means to quantify the degree of protein fiber alignment in a colored structured plant protein product. Generally speaking, as the percentage of large pieces increases, the degree of protein fibers that are aligned within a colored structured plant protein product also typically increases. Conversely, as the percentage of large pieces decreases, the degree of protein fibers that are aligned within a colored structured plant protein product also typically decreases. A method for determining shred characterization is detailed in Example 2. The colored structured plant protein products of the invention typically have an average shred characterization of at least 10% by weight of large pieces. In a further embodiment, the colored structured plant protein products have an average shred characterization of from about 10% to about 15% by weight of large pieces. In another embodiment, the colored structured plant protein products have an average shred characterization of from about 15% to about 20% by weight of large pieces. In yet another embodiment, the colored structured plant protein products have an average shred characterization of from about 20% to about 50% by weight of large pieces. In another embodiment, the average shred characterization is at least 20% by weight, at least 21 % by weight, at least 22% by weight, at least 23% by weight, at least 24% by weight, at least 25% by weight, or at least 26% by weight large pieces.

Suitable colored structured plant protein products of the invention generally have protein fibers that are substantially aligned, have a dark color, have average shear strength of at least 1400 grams, and have an average shred characterization of at least 10% by weight large pieces. More typically, the colored structured plant protein products will have protein fibers that are at least 55% aligned, have a dark color, have average shear strength of at least 1800 grams, and have an average shred characterization of at least 15% by weight large pieces. In exemplary embodiment, the colored structured plant protein products will have protein fibers that are at least 55% aligned, have a dark color, have average shear strength of at least 2000 grams, and have an average shred characterization of at least 17% by weight large pieces. In another exemplary embodiment, the colored structured plant protein products will have protein fibers that are at least 55% aligned, have a dark color, have average shear strength of at least 2200 grams, and have an average shred characterization of at least 20% by weight large pieces.

### (I) Animal Meat

The animal meat compositions, in addition to colored structured plant protein product, also comprise animal meat. In an exemplary embodiment, the animal meat is dark animal meat and generally requires no additional coloring. In another embodiment, light colored animal meat may be utilized and colored to match the color of dark animal meat. Suitable examples of each type of animal meat are described below.

### dark colored animal meat

Because the structured plant protein products of the invention are typically dark in color, they are generally combined with dark animal meat for dark meat applications. In one embodiment, the animal meat is red animal meat. By way of example, the red meat may be from a farm animal selected from the group consisting of sheep, cattle, goats, swine, and horses. The animal meat may be dark meat from poultry, such as chicken, duck, goose or turkey. Alternatively, the animal meat may be dark meat from a game animal. Non-limiting examples of suitable game animals include buffalo, deer, elk, moose, bear, reindeer, caribou, antelope, rabbit, squirrel, beaver, muskrat, opossum, raccoon, armadillo, porcupine, snake, turtle, and lizard. In a further embodiment, the animal meat may be dark meat from a seafood. Non-limiting examples of suitable seafood include fresh water and salt water fish including catfish, tuna, salmon, bass, muskie, pike, bowfin, gar, paddlefish, sturgeon, bream, carp, trout, walleye, snakehead, crappie, along with shellfish, crustaceans, and mollusks.

### (b) light colored animal meat

It is also envisioned that animal meat that is a light color (e.g., from any of the animals identified above) may be utilized in combination with the colored structured plant protein products for dark meat applications. In these embodiments, the light colored animal meat may be colored to resemble the color of dark meat. The light colored animal meat may be colored with a natural colorant, a combination of natural colorants, an artificial colorant, a combination of artificial colorants, or a combination of natural and artificial colorants. Suitable examples of natural colorants approved for use in food include annatto (reddish-orange), anthocyanins (red to blue, depends upon pH), beet juice, beta-carotene (orange), beta-APO 8 carotenal (orange), black currant, burnt sugar; canthaxanthin (pink-red), caramel, carmine/carminic acid (bright red), cochineal extract (red), curcumin (yellow-orange); lutein (red-orange); mixed carotenoids (orange), monascus (red-purple, from fermented red rice), paprika, red cabbage juice, riboflavin (yellow), saffron, titanium dioxide (white), and turmeric (yellow-orange). Suitable examples of artificial colorants approved for use in food include FD&C (Food Drug & cosmetics) Red Nos. 3 (carmosine), 4 (fast red E), 7 (ponceau 4R), 9 (amaranth), 14 (erythrosine), 17 (allura red), 40 (allura red AC) and FD&C Yellow Nos. 5 (tartrazine), 6 (sunset yellow) and 13 (quinoline yellow). Food colorants may be dyes, which are powders, granules, or liquids that are soluble in water. Alternatively, natural and artificial food colorants may be lake colors, which are combinations of dyes and insoluble materials. Lake colors are not oil soluble, but are oil dispersible; they tint by dispersion.

The type of colorant or colorants and the concentration of the colorant or colorants will be adjusted to match the color of the dark animal meat to be simulated. The final concentration of a natural food colorant may range from about 0.01% percent to about 4% by weight.

The color system may further comprise an acidity regulator to maintain the pH in the optimal range for the colorant. The acidity regulator may be an acidulent. Examples of acidulents that may be added to food include citric acid, acetic acid (vinegar), tartaric acid, malic acid, fumaric acid, lactic acid, phosphoric acid, sorbic acid, and benzoic acid. The final concentration of the acidulent in an animal meat composition may range from about 0.001% to about 5% by weight. The final concentration of the acidulent may range from about 0.01% to about 2% by weight. The final concentration of the acidulent may range from about 0.1 % to about 1% by weight. The acidity regulator may also be a pH-raising agent, such as disodium diphosphate.

### (I) Process for Producing Food Products Comprising Animal Meat and Simulated Animal Meat Compositions

Another aspect of the invention provides a process for producing food products comprising animal meat compositions. An animal meat composition may comprise a mixture of animal meat and colored structured plant protein product, or it may comprise colored structured plant protein product. The process generally comprises hydrating the colored structured plant protein product, reducing its particle size if necessary, optionally mixing it with animal meat, and further processing the composition into a food product.

### hydrating the colored structured plant protein product

The colored structured plant protein product may be mixed with water to rehydrate it. The amount of water added to the colored structured plant protein product can and will vary. The ratio of water to colored structured plant protein product may range from about 1.5:1 to about 4:1. In a preferred embodiment, the ration of water to colored structured plant protein product may be about 2.5:1.

### (b) optionally blend with animal meat

The hydrated, colored structured plant protein product may be blended with animal meat to produce animal meat compositions. Any of the animal meats detailed in II above may be utilized. In general, the colored structured plant protein product will be blended with animal meat that has a similar particle size. Typically, the amount of colored structured plant protein product in relation to the amount of animal meat in the animal meat compositions can and will vary depending upon the composition's intended use. By way of example, when a significantly vegetarian composition that has a relatively small degree of animal flavor is desired, the concentration of animal meat in the animal meat composition may be about 45%, 40%, 35%, 30%, 25%, 20%, 15%, 10%, 5%, 2%, or 0% by weight. Alternatively, when an animal meat composition having a relatively high degree of animal meat flavor is desired, the concentration of animal meat in the animal meat composition may be about 50%, 55%, 60%, 65%, 70%, or 75% by weight. Consequently, the concentration of colored structured plant protein product in the animal meat composition may be about 25%,30%,35%, 40%, 45%, 50%, 55%, 60%, 65%, 70%, 75%, 80%, 85%, 90%, 95%, or 99% by weight.

Depending upon the food product, the animal meat is typically precooked to partially dehydrate the flesh and prevent the release of those fluids during further processing applications (e.g., such as retort cooking), to remove natural oils that may have strong flavors, to coagulate the animal protein and loosen the meat from the skeleton, or to develop desirable and textural flavor properties. The pre-cooking process may be carried out in steam, water, oil, hot air, smoke, or a combination thereof. The animal meat is generally heated until the internal temperature is between 60°C and 85 °C.

### addition of optional ingredients

The simulated animal meat compositions or the compositions blended with animal meat may optionally include a variety of flavorings, spices, antioxidants, or other ingredients to nutritionally enhance the final food product. As will be appreciated by a skilled artisan, the selection of ingredients added to the animal meat composition can and will depend upon the food product to be manufactured.

The animal meat compositions may further comprise an antioxidant. The antioxidant may prevent the oxidation of the polyunsaturated fatty acids (e.g., omega-3 fatty acids) in the animal meat, and the antioxidant may also prevent oxidative color changes in the colored structured plant protein product and the animal meat. The antioxidant may be natural or synthetic. Suitable antioxidants include, but are not limited to, ascorbic acid and its salts, ascorbyl palmitate, ascorbyl stearate, anoxomer, N-acetylcysteine, benzyl isothiocyanate, o-, m- or p-amino benzoic acid (o is anthranilic acid, p is PABA), butylated hydroxyanisole (BHA), butylated hydroxytoluene (BHT), caffeic acid, canthaxantin, alpha-carotene, beta-carotene, beta-caraotene, beta-apo-carotenoic acid, camosol, carvacrol, catechins, cetyl gallate, chlorogenic acid, citric acid and its salts, clove extract, coffee bean extract, p-coumaric acid, 3,4-dihydroxybenzoic acid, N,N'-diphenyl-p-phenylenediamine (DPPD), dilauryl thiodipropionate, distearyl thiodipropionate, 2,6-di-tert-butylphenol, dodecyl gallate, edetic acid, ellagic acid, erythorbic acid, sodium erythorbate, esculetin, esculin, 6-ethoxy-1,2-dihydro-2,2,4-trimethylquinoline, ethyl gallate, ethyl maltol, ethylenediaminetetraacetic acid (EDTA), eucalyptus extract, eugenol, ferulic acid, flavonoids, flavones (e.g., apigenin, chrysin, luteolin), flavonols (e.g., datiscetin, myricetin, daemfero), flavanones, fraxetin, fumaric acid, gallic acid, gentian extract, gluconic acid, glycine, gum guaiacum, hesperetin, alpha-hydroxybenzyl phosphinic acid, hydroxycinammic acid, hydroxyglutaric acid, hydroquinone, N-hydroxysuccinic acid, hydroxytryrosol, hydroxyurea, ice bran extract, lactic acid and its salts, lecithin, lecithin citrate; R-alpha-lipoic acid, lutein, lycopene, malic acid, maltol, 5-methoxy tryptamine, methyl gallate, monoglyceride citrate; monoisopropyl citrate; morin, beta-naphthoflavone, nordihydroguaiaretic acid (NDGA), octyl gallate, oxalic acid, palmityl citrate, phenothiazine, phosphatidylcholine, phosphoric acid, phosphates, phytic acid, phytylubichromel, pimento extract, propyl gallate, polyphosphates, quercetin, trans-resveratrol, rosemary extract, rosmarinic acid, sage extract, sesamol, silymarin, sinapic acid, succinic acid, stearyl citrate, syringic acid, tartaric acid, thymol, tocopherols (i.e., alpha-, beta-, gamma- and delta-tocopherol), tocotrienols (i.e., alpha-, beta-, gamma- and delta-tocotrienols), tyrosol, vanilic acid, 2,6-di-tert-butyl-4-hydroxymethylphenol (i.e., Ionox 100), 2,4-(tris-3',5'-bi-tert-butyl-4'-hydroxybenzyl)-mesitylene (i.e., lonox 330), 2,4,5-trihydroxybutyrophenone, ubiquinone, tertiary butyl hydroquinone (TBHQ), thiodipropionic acid, trihydroxy butyrophenone, tryptamine, tyramine, uric acid, vitamin K and derivates, vitamin Q10, wheat germ oil, zeaxanthin, or combinations thereof. The concentration of an antioxidant in an animal meat composition may range from about 0.0001% to about 20% by weight. In another embodiment, the concentration of an antioxidant in an animal meat composition may range from about 0.001 % to about 5% by weight. In yet another embodiment, the concentration of an antioxidant in an animal meat composition may range from about 0.01% to about 1% by weight.

In an additional embodiment, the animal meat compositions may further comprise a flavoring agent such as an animal meat flavor, an animal meat oil, spice extracts, spice oils, natural smoke solutions, natural smoke extracts, yeast extract, and shiitake extract. Additional flavoring agents may include onion flavor, garlic flavor, or herb flavors. The animal meat composition may further comprise a flavor enhancer. Examples of flavor enhancers that may be used include salt (sodium chloride), glutamic acid salts (e.g., monosodium glutamate), glycine salts, guanylic acid salts, inosinic acid salts, 5'-ribonucleotide salts, hydrolyzed proteins, and hydrolyzed vegetable proteins.

In an additional embodiment, the animal meat compositions may further comprise a thickening or a gelling agent, such as alginic acid and its salts, agar, carrageenan and its salts, processed *Eucheuma* seaweed, gums (carob bean, guar, tragacanth, and xanthan), pectins, sodium carboxymethylcellulose, and modified starches.

In a further embodiment, the animal meat compositions may further comprise a nutrient such as a vitamin, a mineral, an antioxidant, an omega-3 fatty acid, or an herb. Suitable vitamins include Vitamins A, C, and E, which are also antioxidants, and Vitamins B and D. Examples of minerals that may be added include the salts of aluminum, ammonium, calcium, magnesium, and potassium. Suitable omega-3 fatty acids include docosahexaenoic acid (DHA). Herbs that may be added include basil, celery leaves, chervil, chives, cilantro, parsley, oregano, tarragon, and thyme.

### variety of food products

The animal meat compositions may be processed into a variety of food product. Typically, the food product will utilize a dark animal meat. By way of non-limiting example, the final product may be an animal meat composition that simulates a ground meat product, a steak product, a sirloin tip product, a kebab product, a shredded product, a chunk meat product, or a nugget product. Any of the foregoing products may be placed in a tray with overwrap, vacuum packed, retort canned or pouched, or frozen.

### DEFINITIONS

The term "extrudate" as used herein refers to the product of extrusion. In this context, the plant protein products comprising protein fibers that are substantially aligned may be extrudates in some embodiments.

The term "fiber" as used herein refers to a plant protein product having a size of approximately 4 centimeters in length and 0.2 centimeters in width after the shred characterization test detailed in Example 2 is performed. Fibers generally form Group 1 in the shred characterization test. In this context, the term "fiber" does not include the nutrient class of fibers, such as soybean cotyledon fibers, and also does not refer to the structural formation of substantially aligned protein fibers comprising the plant protein products,

The term "animal meat" as used herein refers to the flesh, whole meat muscle, or parts thereof derived from an animal.

The term "gluten" as used herein refers to a protein fraction in cereal grain flour, such as wheat, that possesses a high content of protein as well as unique structural and adhesive properties.

The term "gluten free starch" as used herein refers to tapioca starch. Gluten free or substantially gluten free starches are made from wheat, corn, and tapioca based starches. They are gluten free because they do not contain the gluten from wheat, oats, rye or barley.

The term "large piece" as used herein is the manner in which a colored structured plant protein product's shred percentage is characterized. The determination of shred characterization is detailed in Example 2.

The term "protein fiber" as used herein refers the individual continuous filaments or discrete elongated pieces of varying lengths that together define the structure of the plant protein products of the invention. Additionally, because the colored structured plant protein products of the invention have protein fibers that are substantially aligned, the arrangement of the protein fibers impart the texture of whole meat muscle to the colored structured plant protein products.

The term "simulated" as used herein refers to an animal meat composition that contains no animal meat.

The term "soy cotyledon fiber" as used herein refers to the polysaccharide portion of soy cotyledons containing at least about 70% dietary fiber. Soy cotyledon fiber typically contains some minor amounts of soy protein, but may also be 100% fiber. Soy cotyledon fiber, as used herein, does not refer to, or include, soy hull fiber. Generally, soy cotyledon fiber is formed from soybeans by removing the hull and germ of the soybean, flaking or grinding the cotyledon and removing oil from the flaked or ground cotyledon, and separating the soy cotyledon fiber from the soy material and carbohydrates of the cotyledon.

The term "soy protein concentrate" as used herein is a soy material having a protein content of from about 65% to less than about 90% soy protein on a moisture-free basis. Soy protein concentrate also contains soy cotyledon fiber, typically from about 3.5% up to about 20% soy cotyledon fiber by weight on a moisture-free basis. A soy protein concentrate is formed from soybeans by removing the hull and germ of the soybean, flaking or grinding the cotyledon and removing oil from the flaked or ground cotyledon, and separating the soy protein and soy cotyledon fiber from the soluble carbohydrates of the cotyledon.

The term "soy flour" as used herein, refers to a comminuted form of defatted soybean material, preferably containing less than about 1% oil, formed of particles having a size such that the particles can pass through a No. 100 mesh (U.S. Standard) screen. The soy cake, chips, flakes, meal, or mixture of the materials are comminuted into a soy flour using conventional soy grinding processes. Soy flour has a soy protein content of about 49% to about 65% on a moisture free basis. Preferably the flour is very finely ground, most preferably so that less than about 1% of the flour is retained on a 300 mesh (U.S. Standard) screen.

The term "soy protein isolate" as used herein is a soy material having a protein content of at least about 90% soy protein on a moisture free basis. A soy protein isolate is formed from soybeans by removing the hull and germ of the soybean from the cotyledon, flaking or grinding the cotyledon and removing oil from the flaked or ground cotyledon, separating the soy protein and carbohydrates of the cotyledon from the cotyledon fiber, and subsequently separating the soy protein from the carbohydrates.

The term "strand" as used herein refers to a plant protein product having a size of approximately 2.5 to about 4 centimeters in length and greater than approximately 0.2 centimeter in width after the shred characterization test detailed in Example 2 is performed. Strands generally form Group 2 in the shred characterization test.

The term "starch" as used herein refers to starches derived from any native source. Typically sources for starch are cereals, tubers, roots, legumes, and fruits.

The term "wheat flour" as used herein refers to flour obtained from the milling of wheat. Generally speaking, the particle size of wheat flour is from about 14 µm to about 120 µm.

### EXAMPLES

Examples 1-3 illustrate various embodiments of the invention.

### Example 1. Determination of Shear Strength

Shear strength of a sample is measured in grams and may be determined by the following procedure. Weigh a sample of the colored structured plant protein product and place it in a heat sealable pouch and hydrate the sample with approximately three times the sample weight of room temperature tap water. Evacuate the pouch to a pressure of about 0.01 Bar and seal the pouch. Permit the sample to hydrate for about 12 hours to about 24 hours. Remove the hydrated sample and place it on the texture analyzer base plate oriented so that a knife from the texture analyzer will cut through the diameter of the sample. Further, the sample should be oriented under the texture analyzer knife such that the knife cuts perpendicular to the long axis of the textured piece. A suitable knife used to cut the extrudate is a model TA-45, incisor blade manufactured by Texture Technologies (USA). A suitable texture analyzer to perform this test is a model TA, TXT2 manufactured by Stable Micro Systems Ltd. (England) equipped with a 25, 50, or 100 kilogram load. Within the context of this test, shear strength is the maximum force in grams needed to puncture through the sample.

### Example 2. Determination of Shred Characterization

A procedure for determining shred characterization may be performed as follows. Weigh about 150 grams of a colored structured plant protein product using whole pieces only. Place the sample into a heat-sealable plastic bag and add about 450 grams of water at 25° C. Vacuum seal the bag at about 150 mm Hg and allow the contents to hydrate for about 60 minutes. Place the hydrated sample in the bowl of a Kitchen Aid mixer model KM14G0 equipped with a single blade paddle and mix the contents at 130 rpm for two minutes. Scrape the paddle and the sides of the bowl, returning the scrapings to the bottom of the bowl. Repeat the mixing and scraping two times. Remove ~200g of the mixture from the bowl. Separate the -200g of mixture into one of two groups. Group 1 is the portion of the sample having fibers at least 4 centimeters in length and at least 0.2 centimeters wide. Group 2 is the portion of the sample having strands between 2.5 cm and 4.0 cm long, and which are ≥ 0.2 cm wide. Weigh each group, and record the weight. Add the weight of each group together, and divide by the starting weight (e.g. ~200g). This determines the percentage of large pieces in the sample. If the resulting value is below 15%, or above 20%, the test is complete. If the value is between 15% and 20%, then weigh out anther ~200g from the bowl, separate the mixture into groups one and two, and perform the calculations again.

### Example 3, Production of Plant Protein Products

The following extrusion process may be used to prepare the colored structured plant protein products of the Invention. Added to a dry blend mixing tank are the following: 1000 kilograms (kg) Supro 620 (soy isolate), 440 kg wheat gluten, 171 kg wheat starch, 34 kg soy cotyledon fiber, 10 kg of xylose, 9 kg dicalcium phosphate, and 1 kg L-cysteine. The contents are mixed to form a dry blended soy protein mixture. The dry blend is then transferred to a hopper from which the dry blend is introduced into a preconditioner along with 480 kg of water to form a conditioned soy protein pre-mixture. The conditioned soy protein pre-mixture is then fed to a twin-screw extrusion apparatus (Wenger Model TX-168 extruder by Wenger Manufacturing, Inc. (Sabetha, KS)) at a rate of not more than 25 kg/minute. The extrusion apparatus comprises five temperature control zones, with the protein mixture being controlled to a temperature of from about 25°C in the first zone, about 50°C in the second zone, about 95°C in the third zone, about 130°C in the fourth zone, and about 150°C in the fifth zone. The extrusion mass is subjected to a pressure of at least about 2.76 x 10⁶ Pa relative to atmospheric pressure (about 400 psig) in the first zone up to about 1.03 x 10⁷ Pa relative to atmospheric pressure (about 1500 psig) in the fifth zone. Water, 60 kg, is injected into the extruder barrel, via one or more injection jets in communication with a heating zone. The molten extruder mass exits the extruder barrel through a die assembly consisting of a die and a back plate. As the mass flows through the die assembly the protein fibers contained within are substantially aligned with one another forming a fibrous extrudate. As the fibrous extrudate exits the die assembly, it is cut with flexible knives and the cut mass is then dried to a moisture content of about 10% by weight.

### Example 4. Xylose Addition to Structured Plant Protein

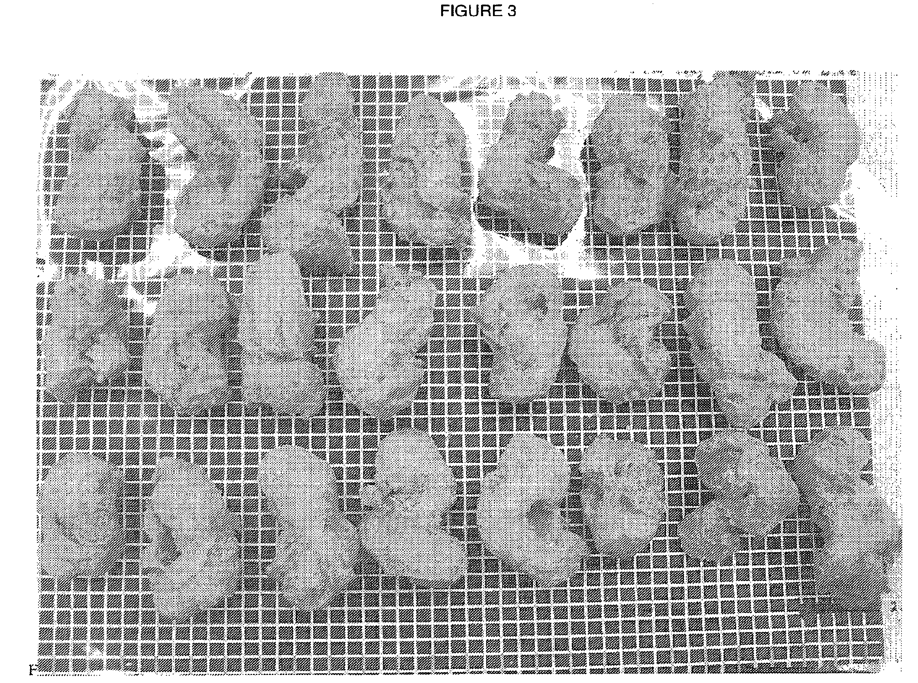

A 1 % inclusion of xylose into the structured plant protein resulted in reduced shear and shred scores and an increase in piece density. The percent fibers could not be determined as the chunks formed a "sheet" instead of individual fibers, however when the chunks were torn manually fibers were formed and micrographs of the colored structured plant protein chunks showed fiber alignment. The chunks were browned, due to the malliard reaction as shown in **Figure 3**. The addition of the xylose showed no improvement over the standard formulation other than obtaining the desired brown coloring.

The structured plant protein was produced as disclosed in Example 3, with the following exceptions: the water in the preconditioner and the barrel was increased in order to maintain a chunk-like shape in the colored structured plant protein. The preconditioner water was taken to the maximum of 30% and the barrel water was taken to 5.2%. All other parameters were the same.

## Claims

1. A process for producing a colored structured plant protein product, the process comprising:
(a) combining a plant protein material with a reducing sugar to form a mixture,
(b) extruding the mixture under conditions of elevated temperature and pressure to form a colored structured plant protein product comprising protein fibers, **characterized in that** at least 55% of the protein fibers are contiguous to each other at less than approximately a 45° angle when viewed in a horizontal plane.

2. The process of claim 1, wherein the colored structured plant protein product is a dark color or a shade of tan or brown; and/or has an average shear strength of at least 1400 grams and an average shred characterization of at least 10%.

3. The process of claim 1 or 2, wherein the reducing sugar is capable of undergoing a Maillard reaction with the plant protein material under conditions of elevated temperature; and/or is selected from the group consisting of a hexose, a pentose, and mixtures thereof or from the group consisting of ribose, xylose, arabinose, lactose, glyceraldehyde, fructose, maltose, glucose, and mixtures thereof, more preferably xylose; and/or the amount of reducing sugar combined with the plant protein material is from about 0.1 % to less than about 2% on a dry matter basis.

4. The process of one of claims 1 to 3, wherein the plant protein material is selected from the group consisting of legumes, corn, peas, canola, sunflowers, sorghum, rice, amaranth, potato, tapioca, arrowroot, canna, lupin, rape, wheat, oats, rye, barley, and mixtures thereof and/or comprises from about 40% to about 100% protein on a dry matter basis and/or comprises protein, starch, gluten, and fiber and preferably:
(a) from about 45% to about 65% soy protein on a dry matter basis;
(b) from about 20% to about 30% wheat gluten on a dry matter basis;
(c) from about 10% to about 15% wheat starch on a dry matter basis; and
(d) from about 1% to about 5% fiber on a dry matter basis;
plant protein material preferably further comprising dicalcium phosphate and L-cysteine.

5. The process of one of claims 1 to 4, further comprising combining at least one animal protein material with the plant protein material and reducing sugar, the animal protein material being preferably selected from the group consisting of casein, caseinates, whey protein, milk protein concentrate, milk protein isolate, ovalbumin, ovoglobulin, ovomucin, ovomucoid, ovotransferrin, ovovitella, ovovitellin, albumin globulin, vitellin, and mixtures thereof.

6. The process of one of claims 1 to 5, wherein the plant protein material comprises soy protein and wheat protein; and the reducing sugar comprises xylose, said process preferably further comprising whey protein.

7. A simulated meat composition comprising a colored structured plant protein product comprising protein fibers and a reducing sugar, **characterized in that** at least 55% of the protein fibers are contiguous to each other at less than approximately a 45° angle when viewed in a horizontal plane, the composition preferably further comprising a flavor selected to impart the flavor of the animal meat the simulated meat composition simulates.

8. An animal meat composition comprising:
(c) animal meat, wherein the animal meat is preferably dark meat; and
(d) colored structured plant protein product;
**characterized in that** the colored structured plant protein product comprises protein fibers and a reducing sugar, where at least 55% of the protein fibers are contiguous to each other at less than approximately a 45° angle when viewed in a horizontal plane.

9. The animal meat composition of claim 8, wherein the animal meat is selected from the group consisting of dark fish meat, beef, pork, dark poultry meat, game meat, and mixtures thereof; and/or wherein the concentration of colored structured plant protein product present in the animal meat composition ranges from about 25% to about 99% by weight and the concentration of animal meat present in the animal meat composition ranges from about 1% to about 75% by weight.

10. The simulated meat composition or animal meat composition of one of claims 7 to 9, wherein the colored structured plant protein product is a dark color or a shade of tan or brown; and/or has an average shear strength of at least 1400 grams and an average shred characterization of at least 10%; and/or has from about 40% to about 100% protein on a dry matter basis.

11. The simulated meat composition or animal meat composition of one of claims 7 to 10, wherein the reducing sugar is selected from the group consisting of a hexose, a pentose, and a mixtures thereof or from the group consisting of ribose, xylose, arabinose, lactose, glyceraldehyde, fructose, maltose, glucose, and mixtures thereof.

12. The simulated meat composition or animal meat composition of one of claims 7 to 11, wherein the plant protein material is selected from the group consisting of legumes, corn, peas, canola, sunflowers, sorghum, rice, amaranth, potato, tapioca, arrowroot, canna, lupin, rape, wheat, oats, rye, barley, and mixtures thereof.

13. The simulated meat composition or animal meat composition of one of claims 7 to 12, wherein the colored structured plant protein product further comprises at least one animal protein material, preferably selected from the group consisting of casein, caseinates, whey protein, milk protein concentrate, milk protein isolate, ovalbumin, ovoglobulin, ovomucin, ovomucoid, ovotransferrin, ovovitella, ovovitellin, albumin globulin, vitellin, and mixtures thereof.

14. The simulated meat composition or animal meat composition of one of claims 7 to 13, wherein the plant protein material comprises soy protein and wheat protein; and the reducing sugar comprises xylose, said composition preferably further comprising whey protein; and/or wherein the composition further comprises an additional ingredient selected from the group consisting of a vitamin, a mineral, an antioxidant, a herb, and mixtures thereof.

15. The simulated meat composition or animal meat composition of one of claims 7 to 14, wherein the colored structured plant protein product comprises protein, starch, gluten, and preferably:
(a) from about 45% to about 65% soy protein on a dry matter basis;
(b) from about 20% to about 30% wheat gluten on a dry matter basis;
(c) from about 10% to about 15% wheat starch on a dry matter basis; and
(d) from about 1% to about 5% fiber on a dry matter basis;
and preferably further comprises dicalcium phosphate and L-cysteine.

## Patentansprüche

1. Verfahren für die Herstellung eines farbigen strukturierten Pflanzenproteinprodukts, wobei das Verfahren Folgendes umfasst:
(a) das Kombinieren eines Pflanzenproteinmaterials mit einem reduzierenden Zucker unter Bildung einer Mischung,
(b) das Extrudieren der Mischung unter Bedingungen erhöhter Temperatur und erhöhten Drucks unter Bildung eines farbigen strukturierten Pflanzenproteinprodukts, das Proteinfasern umfasst, **dadurch gekennzeichnet, dass** mindestens 55% der Proteinfasern in einem Winkel von weniger als etwa 45° nebeneinander liegen, wenn sie in einer horizontalen Ebene betrachtet werden.

2. Verfahren nach Anspruch 1, wobei das farbige strukturierte Pflanzenproteinprodukt eine dunkle Farbe oder einen lohfarbenen oder braunen Farbton aufweist; und/oder eine durchschnittliche Scherfestigkeit von mindestens 1400 Gramm und eine durchschnittliche Zerkleinerungscharakteristik von mindestens 10% aufweist.

3. Verfahren nach Anspruch 1 oder 2, wobei der reduzierende Zucker in der Lage ist, eine Maillard-Reaktion mit dem Pflanzenproteinmaterial unter Bedingungen erhöhter Temperatur durchzumachen; und/oder aus der Gruppe ausgewählt ist bestehend aus einer Hexose, einer Pentose und Mischungen derselben oder aus der Gruppe bestehend aus Ribose, Xylose, Arabinose, Lactose, Glyceraldehyd, Fructose, Maltose, Glucose und Mischungen derselben, noch bevorzugter Xylose; und/oder die Menge an reduzierendem Zucker mit dem Pflanzenproteinmaterial kombiniert etwa 0,1% bis weniger als etwa 2%, auf Trockensubstanzbasis, beträgt.

4. Verfahren nach einem der Ansprüche 1 bis 3, wobei das Pflanzenproteinmaterial aus der Gruppe ausgewählt ist bestehend aus Hülsenfrüchten, Mais, Erbsen, Doppel-Null-Raps, Sonnenblumen, Sorghumhirse, Reis, Amarant, Kartoffel, Cassava, Pfeilwurzel, Blumenrohr, Lupine, Raps, Weizen, Hafer, Roggen, Gerste und Mischungen derselben und/oder etwa 40% bis etwa 100%, auf Trockensubstanzbasis, Protein und/oder Protein, Stärke, Gluten und Faser und bevorzugt:
(a) etwa 45% bis etwa 65%, auf Trockensubstanzbasis, Sojaprotein;
(b) etwa 20% bis etwa 30%, auf Trockensubstanzbasis, Weizengluten;
(c) etwa 10% bis etwa 1 5%, auf Trockensubstanzbasis, Weizenstärke; und
(d) etwa 1% bis etwa 5%, auf Trockensubstanzbasis, Faser umfasst;
wobei das Pflarizenproteinmaterial bevorzugt des Weiteren Dicalciumphosphat und L-Cystein umfasst.

5. Verfahren nach einem der Ansprüche 1 bis 4, des Weiteren umfassend das Kombinieren von mindestens einem tierischen Proteinmaterial mit dem Pflanzenproteinmaterial und dem reduzierenden Zucker, wobei das tierische Proteinmaterial bevorzugt aus der Gruppe ausgewählt ist bestehend aus Casein, Caseinaten, Molkeprotein, Milchproteinkonzentrat, Milchproteinisolat, Ovalbumin, Ovoglobulin, Ovomucin, Ovomucoid, Ovotransferrin, Ovovitella, Ovovitellin, Albuminglobulin, Vitellin und Mischungen derselben.

6. Verfahren nach einem der Ansprüche 1 bis 5, wobei das Pflanzenproteinmaterial Sojaprotein und Weizenprotein umfasst; und der reduzierende Zucker Xylose umfasst, wobei das Verfahren bevorzugt des Weiteren Molkeprotein umfasst.

7. Simulierte Fleischzusammensetzung umfassend ein farbiges strukturiertes Proteinprodukt umfassend Proteinfasern und einen reduzierenden Zucker, **dadurch gekennzeichnet, dass** mindestens 55% der Proteinfasern in einem Winkel von weniger als etwa 45° nebeneinander liegen, wenn sie in einer horizontalen Ebene betrachtet werden, wobei die Zusammensetzung bevorzugt einen Geschmacksstoff umfasst, der ausgewählt wird, um den Geschmack des tierischen Fleisches zu verleihen, den die simulierte Fleischzusammensetzung simuliert.

8. Tierische Fleischzusammensetzung umfassend:
(c) tierisches Fleisch, wobei das tierische Fleisch bevorzugt dunkles Fleisch ist; und
(d) farbiges strukturiertes Pflanzenproteinprodukt; **dadurch gekennzeichnet, dass** das farbige strukturierte Pflanzenproteinprodukt Proteinfasern und einen reduzierenden Zucker umfasst, wobei mindestens 55% der Proteinfasern in einem Winkel von weniger als etwa 45° nebeneinander liegen, wenn sie in einer horizontalen Ebene betrachtet werden.

9. Tierische Fleischzusammensetzung nach Anspruch 8, wobei das tierische Fleisch aus der Gruppe ausgewählt ist bestehend aus dunklem Fischfleisch, Rindfleisch, Schweinefleisch, dunklem Geflügelfleisch, Wildfleisch und Mischungen derselben; und/oder wobei die Konzentration von farbigem strukturiertem Pflanzenproteinprodukt, das in der tierischen Fleischzusammensetzung vorliegt, im Bereich von etwa 25 bis etwa 99 Gew.-% liegt und die Konzentration von tierischem Fleisch, das in der tierischen Fleischzusammensetzung vorliegt, im Bereich von etwa 1 bis etwa 75 Gew.-% liegt.

10. Simulierte Fleischzusammensetzung oder tierische Fleischzusammensetzung nach einem der Ansprüche 7 bis 9, wobei das farbige strukturierte Pflanzenproteinprodukt eine dunkle Farbe oder einen lohfarbenen oder braunen Farbton aufweist; und/oder eine durchschnittliche Scherfestigkeit von mindestens 1400 Gramm und eine durchschnittliche Zerkleinerungscharakteristik von mindestens 10% aufweist; und/oder etwa 40% bis etwa 100%, auf Trockensubstanzbasis, Protein aufweist.

11. Simulierte Fleischzusammensetzung oder tierische Fleischzusammensetzung nach einem der Ansprüche 7 bis 10, wobei der reduzierende Zucker aus der Gruppe ausgewählt ist bestehend aus einer Hexose, einer Pentose und Mischungen derselben oder aus der Gruppe bestehend aus Ribose, Xylose, Arabinose, Lactose, Glyceraldehyd, Fructose, Maltose, Glucose und Mischungen derselben.

12. Simulierte Fleischzusammensetzung oder tierische Fleischzusammensetzung nach einem der Ansprüche 7 bis 11, wobei das Pflanzenproteinmaterial aus der Gruppe ausgewählt ist bestehend aus Hülsenfrüchten, Mais, Erbsen, Doppel-Null-Raps, Sonnenblumen, Sorghumhirse, Reis, Amarant, Kartoffel, Cassava, Pfeilwurzel, Blumenrohr, Lupine, Raps, Weizen, Hafer, Roggen, Gerste und Mischungen derselben.

13. Simulierte Fleischzusammensetzung oder tierische Fleischzusammensetzung nach einem der Ansprüche 7 bis 12, wobei das farbige strukturierte Pflanzenproteinprodukt des Weiteren mindestens eintierisches Proteinmaterial umfasst, das bevorzugt aus der Gruppe ausgewählt ist bestehend aus Casein, Caseinaten, Molkeprotein, Milchproteinkonzentrat, Milchproteinisolat, Ovalbumin, Ovoglobulin, Ovomucin, Ovomucoid, Ovotransferrin, Ovovitella, Ovovitellin, Albuminglobulin, Vitellin und Mischungen derselben.

14. Simulierte Fleischzusammensetzung oder tierische Fleischzusammensetzung nach einem der Ansprüche 7 bis 13, wobei das Pflanzenproteinmaterial Sojaprotein und Weizenprotein umfasst; und der reduzierende Zucker Xylose umfasst, wobei die Zusammensetzung bevorzugt des Weiteren Molkeprotein umfasst; uns/oder wobei die Zusammensetzung des Weiteren einen zusätzlichen Bestandteil umfasst ausgewählt aus der Gruppe bestehend aus einem Vitamin, einem Mineral, einem Antioxidationsmittel, einem Heilkraut und Mischungen derselben.

15. Simulierte Fleischzusammensetzung oder tierische Fleischzusammensetzung nach einem der Ansprüche 7 bis 14, wobei das farbige strukturierte Pflanzenproteinprodukt Protein, Stärke, Gluten und bevorzugt:
(a) etwa 45% bis etwa 65%, auf Trockensubstanzbasis, Sojaprotein;
(b) etwa 20% bis etwa 30%, auf Trockensubstanzbasis, Weizengluten;
(c) etwa 10% bis etwa 15%, auf Trockensubstanzbasis, Weizenstärke;
(d) etwa 1% bis etwa 5%, auf Trockensubstanzbasis, Faser;
und bevorzugt des Weiteren Dicalciumphosphat und L-Cystein umfasst.

## Revendications

1. Un procédé de production d'un produit protéique végétal structuré coloré, ce procédé comprenant :
(a) la combinaison d'un matériau protéique végétal avec un sucre réducteur pour former un mélange,
(b) l'extrusion du mélange dans des conditions de température et de pression élevées pour former un produit protéique végétal structuré coloré comprenant des fibres protéiques, **caractérisé en ce que** au moins 55% de ces fibres protéiques sont contiguës et forment les unes par rapport aux autres un angle d'au moins environ 45° lorsqu'elles sont vues selon un plan horizontal.

2. Le procédé selon la revendication 1, dans lequel le produit protéique végétal structuré coloré présente une couleur foncée ou une nuance bronze ou brune; et/ou une résistance moyenne au cisaillement d'au moins 1400 grammes et une caractérisation de déchiquetage moyen d'au moins 10%.

3. Le procédé selon la revendication 1 ou 2, dans lequel le sucre réducteur est susceptible de donner lieu avec le matériau protéique végétal à une réaction de Maillard dans des conditions de température élevée; et/ou est choisi dans le groupe constitué d'un hexose, pentose et leurs mélanges ou dans le groupe constitué du ribose, xylose, arabinose, lactose, glycéraldéhyde, fructose, maltose, glucose, et leurs mélanges, de préférence le xylose; et/ou la quantité de sucre réducteur combinée avec le matériau protéique végétal va d'environ 0,1% à moins d'environ 2%, sur une base sèche.

4. Le procédé selon l'une quelconque des revendications 1 à 3, dans lequel le matériau protéique végétal est choisi dans le groupe constitué des légumes, maïs, pois, colza, tournesol, sorgho, riz, amarante, pomme de terre, tapioca, arrow-root, canna, lupin, navette, blé, avoine, seigle, orge et leurs mélanges et/ou comprend d'environ 40% à environ 100% de protéines, sur une base sèche, et/ou comprend des protéines, de l'amidon, du gluten et des fibres et de préférence:
(a) d'environ 45% à environ 65% de protéine de soja, sur une base sèche,
(b) d'environ 20% à environ 30% de gluten de blé, sur une base sèche,
(c) d'environ 10% à environ 15% d'amidon de blé, sur une base sèche, et
(d) d'environ 1 % à environ 5% de fibres, sur une base sèche,
le matériau protéique végétal comprenant de préférence, en outre, du phosphate de dicalcium et de la L-cystéine.

5. Le procédé selon l'une quelconque des revendications 1 à 4, comprenant en outre la combinaison d'au moins un matériau protéique animal avec le matériau protéique végétal et le sucre réducteur, le matériau protéique animal étant de préférence choisi dans le groupe constitué de la caséine, des caséinates, de la protéine de lactosérum, du concentré de protéine de lait, de l'isolat de protéine de lait, de l'ovalbumine, de l'ovoglobuline, de l'ovomucine, de l'ovomucoïde, de l'ovotransferrine, de l'ovovitella, de l'ovovitelline, de l'albumine globuline, de la vitelline et de leurs mélanges.

6. Le procédé selon l'une quelconque des revendications 1 à 5, dans lequel le matériau protéique végétal comprend de la protéine de soja et de la protéine de blé; et le sucre réducteur comprend du xylose, ce procédé comprenant de préférence en outre de la protéine de lactosérum.

7. Une composition de viande simulée comprenant un produit protéique végétal structuré coloré comprenant des fibres protéiques et un sucre réducteur, **caractérisé en ce que** au moins 55% de ces fibres protéiques sont contiguës et forment les unes par rapport aux autres un angle d'au moins environ 45° lorsqu'elles sont vues selon un plan horizontal, cette composition de préférence comprenant en outre un agent aromatisant choisi pour conférer le goût de la viande animale que la composition de viande simulée simule.

8. Une composition de viande animale comprenant:
(c) de la viande animale, laquelle viande animale est de préférence de la viande brune; et
(d) le produit protéique végétal structuré coloré;
**caractérisée en ce que** ce produit protéique végétal structuré coloré comprend des fibres protéiques et un sucre réducteur, au moins 55% de ces fibres protéiques étant contiguës et formant les unes par rapport aux autres un angle d'au moins environ 45° lorsqu'elles sont vues selon un plan horizontal.

9. La composition de viande animale selon la revendication 8, dans laquelle la viande animale est choisie dans le groupe constituée de la chair de poisson brune, du oeuf, du porc, de la chair de volaille brune, de la chair de gibier et de leurs mélanges; et/ou dans laquelle la concentration en produit protéique végétal structuré coloré présent dans la composition de viande animale va d'environ 25% à environ 99% en poids et la concentration de chair animale présente dans la composition de viande animale va d'environ 1% à environ 75% en poids.

10. La composition de viande simulée ou composition de viande animale selon l'une quelconque des revendications 7 à 9, dans laquelle le produit protéique végétal structuré coloré présente une couleur foncée ou une nuance bronze ou brune; et/ou présente une résistance au cisaillement moyenne d'au moins 1400 grammes et une caractérisation de déchiquetage moyen d'au moins 10%; et/ou contient d'environ 40% à environ 100% de protéine, sur une base sèche,

11. La composition de viande simulée ou composition de viande animale selon l'une quelconque des revendications 7 à 10, dans laquelle le sucre réducteur est choisi dans le groupe constitué d'un hexose, pentose et leurs mélanges ou dans le groupe constitué du ribose, xylose, arabinose, lactose, glycéraldéhyde, fructose, maltose, glucose et leurs mélanges.

12. La composition de viande simulée ou composition de viande animale selon l'une quelconque des revendications 7 à 11, dans laquelle le matériau protéique végétal est choisi dans le groupe constitué des légumes, maïs, pois, colza, tournesol, sorgho, riz, amarante, pomme de terre, tapioca, arrow root, canna, lupin, navette, blé, avoine, seigle, orge et leurs mélanges

13. La composition de viande simulée ou composition de viande animale selon l'une quelconque des revendications 7 à 12, dans laquelle le produit protéique végétal structuré coloré comprend en outre au moins un matériau protéique animal, et de préférence est choisi dans le groupe constitué de la caséine, des caséinates, de la protéine de blé, du concentré de protéine de lait, de l'isolat de protéine de lait, de l'ovalbumine, de l'ovoglobuline, de l'ovomucine, de l'ovomucoïde, de l'ovotransferrine, de l'ovovitella, de l'ovovitelline, de l'albumine globuline, de la vitelline et de leurs mélanges.

14. La composition de viande simulée ou composition de viande animale selon l'une quelconque des revendications 7 à 13, dans laquelle le matériau protéique végétal comprend de la protéine de soja et de la protéine de blé; et le sucre réducteur comprend du xylose, ladite composition comprenant de préférence en outre de la protéine de lactosérum; et/ou dans laquelle la composition comprend en outre un ingrédient supplémentaire choisi dans le groupe constitué des vitamines, minéraux, antioxydants, herbes aromatiques et leurs mélanges.

15. La composition de viande simulée ou composition de viande animale selon l'une quelconque des revendications 7 à 14, dans laquelle le produit protéique végétal structuré coloré comprend des protéines, de l'amidon, du gluten, et de préférence:
(a) d'environ 45% à environ 65% de protéine de soja, sur une base sèche,
(b) d'environ 20% à environ 30% de gluten de blé, sur une base sèche,
(c) d'environ 10% à environ 15% d'amidon de blé, sur une base sèche, et
(d) d'environ 1 % à environ 5% de fibres, sur une base sèche,
et de préférence comprend en outre du phosphate de dicalcium et de la L-cystéine.
